# EUROPEAN PATENT APPLICATION

(11) **EP 4 582 374 A1**
(43) Date of publication of application: **09.07.2025**
(21) Application number: 24223208.0
(22) Date of filing: 24.12.2024
(51) Int. Cl.: C01B 32/05, C09C 1/54, C09C 1/56, H01M 4/62

(54) **GRANULAR CARBON BLACK AND PREPARATION METHOD THEREFOR, ELECTRODE AND SECONDARY BATTERY**

(30) Priority: 25.12.2023 CN 202311791345
(71) Applicant: Jiaozuo City Hexing Chemical Industry Co., Ltd., Jiaozuo, Henan 454150 (CN)
(72) Inventor: LIU, Yi, Henan 454150 (CN); GUO, Ning, Henan 454150 (CN); YANG, Ningning, Henan 454150 (CN); SUO, Rong, Henan 454150 (CN); LIU, Xinsheng, Henan 454150 (CN); JIA, Shuili, Henan 454150 (CN); ZHU, Licai, Henan 454150 (CN); JIANG, Zhihang, Henan 454150 (CN)
(74) Representative: Monteiro Alves, Inês

(57) **Abstract**

The present disclosure relates to the technical field of carbon black materials, and particularly to a granular carbon black and a preparation method therefor, an electrode and a secondary battery. For the granular carbon black, particle size distribution of the granular carbon black ranges as follows: a weight percent of granular carbon black with a particle diameter less than 0.125 mm is equal to or less than 2 %, a weight percent of granular carbon black with a particle diameter ranging from 0.125 to 0.85 mm is from 18 % to 60 %, and a weight percent of granular carbon black with a particle diameter more than 0.85 mm is from 40 % to 80 %; and a secondary particle diameter D50 of the granular carbon black ranges from 2.0 µm to 3.51 µm. The granular carbon black of the present disclosure has suitable particle size distribution, which not only reduces the pulverization phenomenon, but also can remarkably improve the bulk density and dispersibility, thus being conducive to giving full play to electrical conductivity and other performances.

## Description

### TECHNICAL FIELD

The present disclosure relates to the technical field of carbon black materials, and particularly to a granular carbon black and a preparation method therefor, an electrode and a secondary battery.

### BACKGROUND ART

Most process applications involving carbon black require granulation thereof, and a granulation process conventionally includes adding water or a binding agent to carbon black original powder to perform granulation and drying. Currently, in an existing carbon black granulation process, only water is added to perform the granulation on the carbon black original powder, and an obtained granular carbon black has relatively low strength, which causes a pulverization phenomenon in a subsequent process of transportation or use. Meanwhile, in the existing carbon black granulation process, stirring uniformity is poor in the granulation process with addition of only water, thus leading to large fluctuation in particle diameter of the granular carbon black and limited increase in bulk density (packing density) relative to the carbon black original powder.

In addition, although performing granulation on the carbon black original powder with an additive can improve the particle strength, impurities will be introduced. Meanwhile dispersion is caused to be poor due to segregation of agglomerated particles for the granular carbon black.

In view of this, the present disclosure is specifically proposed.

### SUMMARY

The present disclosure aims at providing a granular carbon black and a preparation method therefor, an electrode and a secondary battery, so as to solve the technical problems, such as difficult pulverization of the granular carbon black, a low bulk density, and poor dispersibility of the granular carbon black, existing in the prior art.

In order to achieve the above objectives of the present disclosure, in one aspect, the present disclosure provides a granular carbon black, where
particle size distribution of the granular carbon black ranges as follows:
particle size distribution of the granular carbon black ranges as follows: a weight percent of granular carbon black with a particle diameter less than 0.125 mm is equal to or less than 2 %, a weight percent of granular carbon black with a particle diameter ranging from 0.125 to 0.85 mm is from 18 % to 60 %, and a weight percent of granular carbon black with a particle diameter more than 0.85 mm is from 40 % to 80 %; and
a secondary particle diameter D50 of the granular carbon black ranges from 2.0 µm to 3.51 µm.

In specific embodiments of the present disclosure, the granular carbon black has an amount of an apparent specific volume ranging from 3.2 mL/g to 3.4 mL/g.

In specific embodiments of the present disclosure, a DBP absorption value (also called oil absorption value or absorption value) of the granular carbon black is X₁, and a DBP absorption value of a carbon black original powder granulated to render the granular carbon black is X₂, where a value of (X₂-X₁)/X₂ ranges from 14.3% to 26.5%.

In specific embodiments of the present disclosure, the secondary particle diameter D50 of the granular carbon black is Yi, and a secondary particle diameter D50 of the carbon black original powder granulated to render the granular carbon black is Y₂, where a value of (Y₂-Y₁)/Y₂ ranges from 60.2% to 77.3%.

In specific embodiments of the present disclosure, the granular carbon black has an amount of particle strength equal to or less than 5.3 gf per particle, for example, ranges from 4.6 to 5.3 gf per particle.

In specific embodiments of the present disclosure, a raw material of the granular carbon black is acetylene black.

In another aspect, the present disclosure provides a preparation method for the granular carbon black according to any one of the above, including following steps: wetting carbon black original powders with water, and then performing wet granulation and drying, where
in the wet granulation, firstly, a stirring treatment is performed at a stirring speed of 2,200 r/min to 2,800 r/min for 15 min to 25 min, and then the stirring treatment is performed at a stirring speed of 1,200 r/min to 1,800 r/min for 2 min to 8 min; and
a mass ratio of the carbon black original powder to the water is 1: (2-2.5).

In specific embodiments of the present disclosure, in the wetting, a pre-stirring treatment is performed at a stirring speed of 1,000 r/min to 1,400 r/min. Further, duration of the pre-stirring treatment is 1 min to 5 min.

In specific embodiments of the present disclosure, a temperature of the water is equal to or more than 60 °C.

In specific embodiments of the present disclosure, the carbon black original powder is acetylene black.

In another aspect, the present disclosure provides an electrode, including the granular carbon black according to any one of the above.

In another aspect, the present disclosure provides a secondary battery, including a positive electrode, a negative electrode, an electrolyte and a separator, where at least one of the positive electrode and the negative electrode is the electrode according to any one of the above.

Compared with the prior art, the present disclosure has following beneficial effects:
(1) The granular carbon black of the present disclosure has suitable particle size distribution, which not only reduces the pulverization phenomenon, but also can remarkably improve the bulk density and dispersibility; and
(2) The preparation method for a granular carbon black of the present disclosure is simple to operate, introduces no additional additives, and causes no particle segregation or pollution, thus further ensuring the dispersibility of the granular carbon black.

### BRIEF DESCRIPTION OF DRAWINGS

In order to more clearly illustrate technical solutions in embodiments of the present disclosure or in the prior art, drawings which need to be used in the description of the embodiments or the prior art will be briefly introduced below. Apparently, the drawings in the following description merely show some embodiments of the present disclosure, and those ordinarily skilled in the art still could obtain other drawings in light of these drawings without using any inventive efforts.

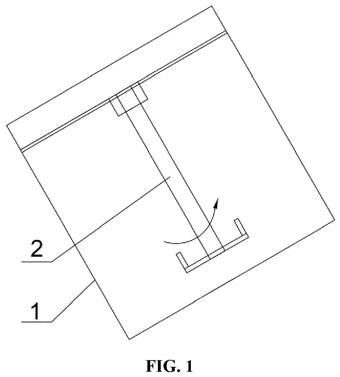

FIG. 1 is a structural schematic view of a device for preparing a granular carbon black provided in embodiments of the present disclosure.

### Reference signs:

1-granulation barrel; 2-impeller.

### DETAILED DESCRIPTION OF EMBODIMENTS

Technical solutions of the present disclosure will be described clearly and completely below in conjunction with the drawings and embodiments, while those skilled in the art would understand that the examples described below are some but not all examples of the present disclosure, and they are merely used for illustrating the present disclosure, but should not be considered as limiting the scope of the present disclosure. Based on the examples in the present disclosure, all of other examples obtained by those skilled in the art without using inventive efforts shall fall within the scope of protection of the present disclosure. Examples, for which no concrete conditions are specified, are carried out according to conventional conditions or conditions recommended by manufactures. Where manufacturers of reagents or instruments used are not specified, they are conventional products commercially available.

Carbon black has excellent electrical conductivity, and is widely applied in fields such as batteries, resins and rubbers. The carbon black obtained in initial production is in a powdery form, and due to a low bulk density and easy pulverization, a granulation treatment is usually performed on the carbon black original powder so as to improve usability and transportation convenience thereof.

With development requirements of related art, not only the pulverization problem of the granular carbon black obtained by granulation needs to be reduced, but also the bulk density of the granular carbon black needs to be increased, so that it is enabled to be easily dispersed uniformly in a substrate in downstream applications, and full play of performance is ensured.

However, the granulation is currently performed on the carbon black original powder by adding water, and since no other binding agents are added and the carbon black has a developed structure, particle strength of the granular carbon black after the granulation is lower than that of common conductive granular carbon black; therefore, when it is mixed with a resin and/or a rubber or is transported, the pulverization phenomenon occurs, which affects use thereof. At the same time, the granular carbon black obtained by granulation with addition of only water has large fluctuation in particle range and limited increase in bulk density, fewer particles are contained in a certain mass of carbon black, and the granular carbon black is not easily distributed uniformly in a resin, a rubber or an electrode material in downstream applications, thus having poor dispersibility. Although the particle strength can be improved when the granulation is performed on the carbon black original powder with an additive such as a binding agent, impurities will be introduced to affect use thereof.

The inventors found from researches that during production of carbon black, primary particles melt into a larger three-dimensional and chain-branch structure aggregate, called as carbon black primary structure, where a secondary particle diameter is a measure of a particle diameter of the primary structure. The more branched aggregate is followed by a larger internal void and a higher carbon black primary structure. Such aggregates having well-developed branches and void structures are further agglomerated into agglomerates and carbon black particles through physical effects such as Van der Waals force. In a process of using the carbon black, the agglomerates of the carbon black are opened by means of sanding, grinding, etc. to become the primary structure, so as to improve a degree of dispersion of the carbon black in an electrode material, a rubber, plastic, etc., and improve an application effect of the carbon black. With the decrease in the secondary particle diameter, the carbon black can be promoted to be better dispersed during application, thus improving the dispersibility. The decrease in the secondary particle diameter guarantees the dispersibility to some extent, but is insufficient for improvement on the bulk density, so that the number of particles in a certain volume of granular carbon black is not enough.

When the granular carbon black has suitable particle size distribution, particles with a relatively small particle diameter can be sufficiently filled in vacancies between particles with a relatively large particle diameter, so as to improve the bulk density. However, if the particle diameter of the particles is too small, not only the filling is ineffective, but also pulverization is caused; moreover, if there are too few particles with a relatively low particle diameter and few vacancies, effective filling cannot be achieved; and too many small particles in turn introduce risks of aggregation and insufficient dispersion.

In the present disclosure, by synergistically adjusting and controlling a secondary particle diameter D50 of the granular carbon black and range of particle size distribution of the granular carbon black, the dispersibility and the bulk density of the granular carbon black are both guaranteed, and the pulverization phenomenon is reduced.

Based on this, in one aspect, the present disclosure provides a granular carbon black, wherein
particle size distribution of the granular carbon black ranges as follows: a weight percent of granular carbon black with a particle diameter less than 0.125 mm is equal to or less than 2 %, a weight percent of granular carbon black with a particle diameter ranging from 0.125 to 0.85 mm is from 18 % to 60 %, and a weight percent of granular carbon black with a particle diameter more than 0.85 mm is from 40 % to 80 %; and
a secondary particle diameter D50 of the granular carbon black ranges from 2.0 µm to 3.51 µm.

In the above, a weight percent of the granular components with the particle diameter less than 0.125 mm can be 2 %, 1.8 %, 1.5 %, 1.2 %, 1 %, 0.8 %, 0.5 %, 0.2 % or a range between any two thereof; a weight percent of the granular components with the particle diameter ranging from 0.125 to 0.85 µm can be 18 %, 20 %, 25 %, 30 %, 35 %, 40 %, 45 %, 50 %, 55 %, 60 % or a range between any two thereof; and a weight percent of the granular components with the particle diameter more than 0.85 mm can be 40 %, 45 %, 50 %, 55 %, 60 %, 65 %, 70 %, 75 %, 80 % or a range between any two thereof.

The granular components with the particle diameter within the range from 0.125 to 0.85 mm can be effectively filled in vacancies formed between the granular components with the particle diameter more than 0.85 mm, thus greatly improving the bulk density, so that as many particles as possible are contained in a certain volume of the granular carbon black, and are further easy to uniformly distribute in an electrode material, a resin and/or a rubber, etc. in an application process, thus improving dispersibility, without occurrence of a pulverization problem.

In specific embodiments of the present disclosure, the granular carbon black has an amount of an apparent specific volume ranging from 3.2 mL/g to 3.4 mL/g.

The apparent specific volume of the carbon black is measured with reference to a method of GB/T 3781.6. The apparent specific volume of the granular carbon black of the present disclosure can be 3.2 mL/g, 3.25 mL/g, 3.3 mL/g, 3.35 mL/g, 3.4 mL/g or in a range between any two thereof. When the particle size distribution of the granular carbon black of the present disclosure meets the above condition, the bulk density can be effectively increased, and the apparent specific volume of corresponding granular carbon black is within the above range.

In specific embodiments of the present disclosure, a DBP absorption value of the granular carbon black is X₁, and a DBP absorption value of carbon black original powders granulated to render the granular carbon black is X₂, where a value of (X₂-X₁)/X₂ ranges from 14.3% to 26.5%.

In the above, the DBP absorption values of the granular carbon black and the carbon black original powder are measured with reference to a method of GB/T 14853.6.

As in different embodiments, a change rate (X₂-X₁)/X₂ of the DBP absorption value of the carbon black original powder for preparing the granular carbon black, before and after granulation, can be 14.3%, 15%, 16.3%, 18.4%, 20%, 22%, 25%, 26.5% or in a range between any two thereof.

In specific embodiments of the present disclosure, the secondary particle diameter D50 of the granular carbon black is Yi, and the secondary particle diameter D50 of the carbon black original powder granulated to render the granular carbon black is Y₂, where a value of (Y₂-Y₁)/Y₂ ranging from 60.2% to 77.3%.

As in different embodiments, a change rate (Y₂-Y₁)/Y₂ of the secondary particle diameter D50 of the carbon black original powder for preparing the granular carbon black, before and after granulation, can be 60.2%, 62%, 63.7%, 64.9%, 65%, 68%, 70%, 72%, 75%, 77.1%, 77.3% or in a range between any two thereof.

An overall structure of carbon black is a measure of complexity of carbon black aggregate particles, and is often expressed in terms of oil absorption value, which specifically refers to number of milliliters of oil adsorbed relative to 100 g of carbon black. When the carbon black has a relatively high DBP absorption value, it indicates that the carbon black has a relatively high structural or volume-occupying property. The DBP absorption value of the carbon black is measured with reference to the method of GB/T 14853.6. In the present disclosure, the secondary particle diameter D50 of the granular carbon black is remarkably reduced compared with that of the carbon black original powder, so as to meet requirement on dispersibility. Meanwhile, compared with the carbon black original powder, the granular carbon black obtained by granulation is changed in appearance and structure, and the change rate of the DBP absorption value before and after the granulation can be kept within a corresponding range, indicating that a microscopic porous structure in the granular carbon black is still retained to a great extent, thus greatly reducing influence on performance of the granular carbon black.

In specific embodiments of the present disclosure, the granular carbon black has an amount of particle strength equal to or less than 5.3 gf per particle, such as 4.6 gf per particle to 5.3 gf per particle.

The particle strength of the granular carbon black is measured with reference to a method of GB/T 14853.6. As in different embodiments, the particle strength of the granular carbon black of the present disclosure can be 4.6 gf per particle, 4.7 gf per particle, 4.8 gf per particle, 4.9 gf per particle, 5 gf per particle, 5.1 gf per particle, 5.2 gf per particle, 5.3 gf per particle or a range between any two thereof. When the particle strength is within the above range, the granular carbon black can be ensured not to be easily broken during transportation, and meanwhile the granular carbon black is ensured to have a higher pulverization rate when subsequently being mixed with the rest materials for use, thus improving the dispersibility.

In specific embodiments of the present disclosure, carbon black original powder as raw material of the granular carbon black is any one selected from the group consisting of acetylene black, furnace black, channel black, lamp black and thermal black. It can be understood that, in specific embodiments of the present disclosure, acetylene black is taken as the carbon black original powder to exemplarily describe the granular carbon black and the preparation method therefor, rather than limiting types of the carbon black original powder of the present disclosure.

In another aspect, the present disclosure provides a preparation method for any one of the above granular carbon blacks, including following steps: wetting carbon black original powders with water, and then performing wet granulation and drying.

In the wet granulation, firstly, a stirring treatment is performed at a stirring speed of 2,200 r/min to 2,800 r/min for 15 min to 25 min, and then the stirring treatment is performed at a stirring speed of 1,200 r/min to 1,800 r/min for 2 min to 8 min.

A mass ratio of the carbon black original powder to the water is 1: (2-2.5).

In the wet granulation, firstly, a carbon black structure is depolymerized using highspeed shear, so as to reduce a secondary particle diameter of the carbon black. The secondary particle diameter is continuously reduced within a time range of 15 min to 25 min of the stirring treatment; and when corresponding stirring period is exceeded, particles are agglomerated, causing an increase in a macroscopic particle diameter of the granular carbon black. After this stage is ended, a particle size distribution interval of the granular carbon black is adjusted by adjusting the stirring speed, where when a rotational speed is increased, a particle diameter interval turns to be small; when the rotational speed is slow, the particle diameter interval turns to be large; and when the period is extended, the particle diameter interval turns to be large. By adjusting and controlling the rotational speed and the period to be within the above ranges, the granular carbon black with the secondary particle diameter D50 and the particle size distribution meeting requirements is obtained.

As in different embodiments, in the wet granulation, the stirring treatment can be first performed at a stirring speed of 2,200 r/min, 2,400 r/min, 2,500 r/min, 2,600 r/min, 2,800 r/min or in a range between any two thereof for 15 min, 18 min, 20 min, 22 min, 25 min or a range between any two thereof; and then the stirring treatment is performed at 1,200 r/min, 1,400 r/min, 1,500 r/min, 1,600 r/min, 1,800 r/min or in a range between any two thereof for 2 min, 4 min, 5 min, 6 min, 8 min or a range between any two thereof.

A mass ratio of the carbon black original powder to the water can be 1:2, 1 :2.1, 1:2.2, 1:2.3, 1:2.4, 1:2.5 or in a range between any two thereof.

Less water used in the granulation is followed by smaller distribution of the granular carbon black after granulation, and a pulverization ratio accounts for 50% or above; and more water used is followed by larger distribution of the granular carbon black after granulation, the granular carbon black is not in a spherical shape, and a subsequent drying cost is too high. By adjusting and controlling the mass ratio of the carbon black original powder to the water to be within the above range, requirements on particle size distribution, production cost, etc. can be all taken into account and ensured.

In specific embodiments of the present disclosure, in the wetting, a pre-stirring treatment is performed at a stirring speed of 1,000 r/min to 1,400 r/min. Further, the pre-stirring treatment lasts for 1 min to 5 min.

In the wetting, a certain mass of water is added into a container containing the carbon black original powder under a stirring condition, and the pre-stirring treatment is performed at stirring speed of 1,000 r/min, 1,100 r/min, 1,200 r/min, 1,300 r/min, 1,400 r/min or in a range between any two thereof, so that the carbon black original powder is in a fluffy state, facilitating uniform wetting of water and the carbon black original powder. In the above, duration of the pre-stirring treatment can be 1 min, 2 min, 3 min, 4 min, 5 min or in a range between any two thereof.

In specific embodiments of the present disclosure, a temperature of the water is equal to or more than 60 °C. In practical operations, the water used can be deionized water, and the temperature of the water can be 60 °C, 70 °C, 80 °C, etc.

In practical operations, the water can be added in a spraying manner during the granulation.

In specific embodiments of the present disclosure, the carbon black original powder is any one of acetylene black, furnace black, channel black, lamp black and thermal black.

The present disclosure further provides a device for implementing the preparation method for any one of the above granular carbon blacks, as shown in FIG. 1, including a granulation barrel 1 and an impeller 2, where the impeller 2 extends into the granulation barrel 1 to stir a material in the granulation barrel 1. A central axis of the granulation barrel 1 does not coincide with a central axis of the impeller 2, that is, eccentric stirring is performed. The granulation barrel 1 can be fixed or supported by a conventional structure such as a bracket, etc., which will not be elaborated in the present disclosure.

Further, the central axis of the granulation barrel 1 and a horizontal plane have an included angle therebetween, that is, the granulation barrel 1 is obliquely provided. In the above, the included angle can be 60°.

In another aspect, the present disclosure provides an electrode, including any one of the above granular carbon blacks.

In the above, as a conductive material, the carbon black is used for preparation of an electrode, where the carbon black can be used as a unique conductive material, and can also be used together with other conductive materials.

In another aspect, the present disclosure provides a secondary battery, including a positive electrode, a negative electrode, an electrolyte and a separator, where at least one of the positive electrode and the negative electrode is any one of the above electrodes.

The carbon black original powders used in the following specific examples and comparative examples are the same and are conventional commercially available powdery blacks.

### Example 1

Example 1 provided a preparation method for a granular carbon black, using a device as shown in FIG. 1 for preparation, including following steps:
adding 1 kg of carbon black original powder as raw material into a granulation barrel, adding 2 kg of 60 °C water into the granulation barrel while stirring, and stirring at a stirring speed of 1,200 r/min for 3 min; then stirring at a stirring speed of 2,400 r/min for 25 min; then stirring at a stirring speed of 1,500 r/min for 5 min; and finally discharging the material and drying the same under a condition of 90 °C.

### Example 2

Example 2 provided a preparation method for a granular carbon black, using a device as shown in FIG. 1 for preparation, including following steps:
adding 1 kg of carbon black original powder as raw material into a granulation barrel, adding 2.1 kg of 60 °C water into the granulation barrel while stirring, and stirring at a stirring speed of 1,400 r/min for 3 min; then stirring at a stirring speed of 2,400 r/min for 25 min; then stirring at a stirring speed of 1,500 r/min for 5 min; and finally discharging the material and drying the same under a condition of 90 °C.

### Example 3

Example 3 provided a preparation method for a granular carbon black, using a device as shown in FIG. 1 for preparation, including following steps:
adding 1 kg of a carbon black original powder as raw material into a granulation barrel, adding 2.5 kg of 60 °C water into the granulation barrel while stirring, and stirring at a stirring speed of 1,200 r/min for 3 min; then stirring at a stirring speed of 2,200 r/min for 25 min; then stirring at a stirring speed of 1,500 r/min for 5 min; and finally discharging the material and drying the same under a condition of 90 °C.

### Example 4

Example 4 provided a preparation method for a granular carbon black, using a device as shown in FIG. 1 for preparation, including following steps:
adding 1 kg of a carbon black original powder as raw material into a granulation barrel, adding 2 kg of 60 °C water into the granulation barrel while stirring, and stirring at a stirring speed of 1,200 r/min for 3 min; then stirring at a stirring speed of 2,400 r/min for 25 min; then stirring at a stirring speed of 1,200 r/min for 8 min; and finally discharging the material and drying the same under a condition of 90 °C.

### Example 5

Example 5 provided a preparation method for a granular carbon black, using a device as shown in FIG. 1 for preparation, including following steps:
adding 1 kg of a carbon black original powder as raw material into a granulation barrel, adding 2 kg of 70 °C water into the granulation barrel while stirring, and stirring at a stirring speed of 1,000 r/min for 3 min; then stirring at a stirring speed of 2,800 r/min for 15 min; then stirring at a stirring speed of 1,800 r/min for 2 min; and finally discharging the material and drying the same under a condition of 90 °C.

### Comparative Example 1

Comparative Example 1 provided a preparation method for a granular carbon black, using a device as shown in FIG. 1 for preparation, including following steps:
adding 1 kg of a carbon black original powder as raw material into a granulation barrel, adding 3 kg of 60 °C water into the granulation barrel while stirring, and stirring at a stirring speed of 1,200 r/min for 3 min; then stirring at a stirring speed of 2,400 r/min for 25 min; then stirring at a stirring speed of 1,500 r/min for 5 min; and finally discharging the material and drying the same under a condition of 90 °C.

### Comparative Example 2

Comparative Example 2 provided a preparation method for a granular carbon black, using a device as shown in FIG. 1 for preparation, including following steps:
adding 1 kg of a carbon black original powder as raw material into a granulation barrel, adding 1.8 kg of 60 °C water into the granulation barrel while stirring, and stirring at a stirring speed of 1,200 r/min for 3 min; then stirring at a stirring speed of 2,400 r/min for 15 min; then stirring at a stirring speed of 1,500 r/min for 5 min; and finally discharging the material and drying the same under a condition of 90 °C.

### Comparative Example 3

Comparative Example 3 provided a preparation method for a granular carbon black, using a device as shown in FIG. 1 for preparation, including following steps:
adding 1 kg of a carbon black original powder as raw material into a granulation barrel, adding 2 kg of 60 °C water into the granulation barrel while stirring, and stirring at a stirring speed of 1,200 r/min for 3 min; then stirring at a stirring speed of 2,400 r/min for 30 min; then stirring at a stirring speed of 1,500 r/min for 10 min; and finally discharging the material and drying the same under a condition of 90 °C.

### Comparative Example 4

Comparative Example 4 provided a preparation method for a granular carbon black, using a device as shown in FIG. 1 for preparation, including following steps:
adding 1 kg of a carbon black original powder as raw material into a granulation barrel, adding 2 kg of 60 °C water into the granulation barrel while stirring, and stirring at a stirring speed of 1,200 r/min for 3 min; then stirring at a stirring speed of 2,400 r/min for 30 min; and finally discharging the material and drying the same under a condition of 90 °C.

### Comparative Example 5

Comparative Example 5 provided a preparation method for a granular carbon black, using a conventional wet horizontal roll-tooth granulator, specifically:
feeding 1 kg of a carbon black original powder as raw material into the wet horizontal roll-tooth granulator, adding 2.7 kg of deionized water to perform wet granulation, performing the granulation for 5 min, taking out resultant, performing a drying treatment under a condition of 90 °C.

### Comparative Example 6

The carbon black original powder as raw material used in Example 1.

### Experimental Example 1

DBP absorption values of the carbon blacks were measured using a method of GB/T 14853.6; particle strength of the granular carbon blacks was measured using a method of GB/T 14853.6; a secondary particle diameter D50 of the carbon blacks was measured using a method of GB/T 19077.1; an apparent specific volume of the carbon black was measured using a method of GB/T 3781.6; and a particle size distribution of the granular carbon black was measured using a sieving method (120-mesh and 20-mesh screens). Performance data of the granular carbon blacks of Examples 1-5 and Comparative Examples 1-5 and the carbon black original powders of Comparative Example 6 are as shown in TABLE 1.

**TABLE 1 Results of Performance Test**

| No. | particle size distribution | | Secondary particle diameter D50 (µm) | DBP absorption value (ml/100 g) | Apparent Specific Volume (mL/g) | Particle Strength (gf per particle) |
|---|---|---|---|---|---|---|
| Example 1 | <0.125 mm | 1.50 wt% | 3.1 | 200 | 3.2 | 5.3 |
| | 0.125 mm-0.85 mm | 58.50 wt% | | | | |
| | >0.85 mm | 40.00 wt% | | | | |
| Example 2 | <0.125 mm | 1.60 wt% | 2.0 | 180 | 3.3 | 5 |
| | 0.125-0.85 mm | 39.70 wt% | | | | |
| | >0.85 mm | 58.70 wt% | | | | |
| Example 3 | <0.125 mm | 2.00 wt% | 3.51 | 210 | 3.4 | 4.6 |
| | 0.125 mm-0.85 mm | 18.00% | | | | |
| | >0.85 mm | 80.00 wt% | | | | |
| Example 4 | <0.125 mm | 1.40 wt% | 3.2 | 205 | 3.2 | 4.7 |
| | 0.125 mm-0.85 mm | 53.50 wt% | | | | |
| | >0.85 mm | 45.10 wt% | | | | |
| Example 5 | <0.125 mm | 1.80 wt% | 2.5 | 190 | 3.3 | 5.2 |
| | 0.125 mm-0.85 mm | 45.60 wt% | | | | |
| | >0.85 mm | 52.60 wt% | | | | |
| Comparative Example 1 | <0.125mm | 0.35 wt% | 4.3 | 210 | 3.5 | 5.6 |
| | 0.125 mm-0.85 mm | 94.9 wt% | | | | |
| | >0.85 mm | 4.75 wt% | | | | |
| Comparative Example 2 | <0.125mm | 0.54 wt% | 1.9 | 175 | 3.6 | 5.2 |
| | 0.125 mm-0.85 mm | 18.87 wt% | | | | |
| | >0.85 mm | 80.59 wt% | | | | |
| Comparative Example 3 | <0.125mm | 3.50 wt% | 1.7 | 160 | 3.1 | 4.3 |
| | 0.125 mm-0.85 mm | 11.90% | | | | |
| | >0.85 mm | 84.60 wt% | | | | |
| Comparative Example 4 | <0.125 mm | 5.70 wt% | 1.8 | 170 | 2.9 | 4.2 |
| | 0.125 mm-0.85 mm | 10.40% | | | | |
| | >0.85 mm | 83.90 wt% | | | | |
| Comparative Example 5 | <0.125 | 8.30% | 4.2 | 225 | 3.7 | 4 |
| | 0.125-0.85 mm | 89.60% | | | | |
| | >0.9 | 2.10% | | | | |
| Comparative Example 6 | / | | 8.82 | 245 | 11 | / |

As can be seen from TABLE 1, in the granular carbon blacks of the present disclosure, a weight percent of granular carbon black with a particle diameter less than 0.125 mm is equal to or less than 2 %, far lower than that of the granular carbon black produced by the existing granulation technology in Comparative Example 5, thus greatly reducing the pulverization phenomenon of the granular carbon black during transportation, processing and use. At the same time, the particle size distribution of the granular carbon blacks enables small carbon black particles to be sufficiently filled in vacancies between large granular carbon black particles, thus greatly improving the bulk density, so that as many particles as possible are contained in a certain volume of granular carbon black, and are further easy to uniformly distribute in an electrode material, a resin and/or a rubber, etc. in applications, thus improving the dispersibility of the carbon black in the electrode material, the resin and/or the rubber, etc. Moreover, from comparison of the apparent specific volumes, it can be seen that the granular carbon blacks of the present disclosure have reduced apparent specific volumes and improved bulk densities, which is consistent with an analysis result of the particle size distribution of the granular carbon blacks.

The secondary particle diameter D50 of the carbon black original powders for preparation of the granular carbon black in Examples 1-5 have change rates of 64.9%, 77.3%, 60.2%, 63.7%, and 71.7% respectively before and after granulation. It can be seen therefrom that the secondary particle diameter D50 of the granular carbon black is greatly reduced compared with the secondary particle diameter D50 of the carbon black original powder as raw material. During the granulation in the present disclosure, by repeatedly stirring and shearing the carbon black original powder as raw material through a stirring mechanism, an agglomerate mechanism of the carbon black is depolymerized, so as to reduce the secondary particle diameter, further enabling the granular carbon black to be better dispersed during processing and applications, and improving the dispersibility.

The DBP absorption values of the carbon black original powders for preparing the granular carbon blacks in Examples 1-5 have change rates of 18.4%, 26.5%, 14.3%, 16.3%, and 22.4% respectively before and after the granulation. It can be seen therefrom that the DBP absorption values of the granular carbon blacks prepared in the present disclosure are reduced compared with that of the carbon black original powder as raw material without granulation, and when a degree of reduction can be controlled within a corresponding range, it indicates that although the secondary particle diameter D50 is greatly reduced during the granulation of the present disclosure, structural damage to a microscopic porous structure is limited, and thus influence on performance of the granular carbon black is greatly reduced.

The particle strength of the granular carbon blacks prepared in the present disclosure satisfy a certain requirement, so that it is not easy to break during transportation, and is easy to pulverize during use and processing, thus improving practicability and dispersibility of the granular carbon blacks.

### Experimental Example 2

The granular carbon blacks of Examples 1-5 and Comparative Examples 1-6 were respectively used to prepare electrode slurries, and resistance of diaphragms (separators) was tested, specifically including following steps.

### 1. Preparation of the electrode slurries

LiCoO₂, polyvinylidene fluoride and each granular carbon black were mixed in a mass ratio of 96:2:2 in N-methylpyrrolidone so as to prepare the electrode slurry. In the above, the each granular carbon black is selected from the granular carbon blacks prepared in Examples 1-5 and Comparative Examples 1-5, respectively.

### 2. Preparation of the diaphragms

On a coating machine, each electrode slurry prepared above was coated on a polyethylene terephthalate (PET) film in a thickness of 100 µm, and dried at 90 °C, and then the film was cut into a circular sheet with a diameter of 30 mm to obtain diaphragm.

### 3. Test of resistance of the diaphragms

Each cut PET circular sheet was placed on a four-probe tester (model: RTS-8). Corresponding parameters of temperature (23±3 °C), humidity (relative humidity ≤30%), and thickness and diameter of the PET circular sheet were set, and then the resistance of each of the diaphragms was tested by adjusting a current. Test results are shown in TABLE 2.

**TABLE 2 Test Results of Resistance of Different Diaphragms**

| Test Item | Example 1 | Example 2 | Example 3 | Example 4 | Example 5 | Comparative Example 1 |
|---|---|---|---|---|---|---|
| Resistance of Diaphragm (Ω·cm) | 12.25 | 7.27 | 15.13 | 13.78 | 10.64 | 30.27 |

| Test Item | Comparative Example 2 | Comparative Example 3 | Comparative Example 4 | Comparative Example 5 | Comparative Example 6 | |
|---|---|---|---|---|---|---|
| Resistance of Diaphragm (Ω·cm) | 23.92 | 20.85 | 22.35 | 28.18 | 35.16 | |

As can be seen from the above table, the resistance of the diaphragms of the electrode slurries prepared using the granular carbon blacks of the examples of the present disclosure is remarkably lower than the resistance of the diaphragms of the electrode slurries prepared using the granular carbon blacks of the comparative examples. It can be confirmed that, by performing the granulation on the carbon black original powders, and enabling the obtained granular carbon black to have the secondary particle diameter satisfying a corresponding range and have certain particle size distribution by the method of the present disclosure, the granular carbon black can be well dispersed between electrode active materials, thus increasing contact between the electrode active materials and the carbon black, and improving conductivity of the slurry and the electrode.

Finally, it should be noted that the various examples above are merely used for illustrating the technical solutions of the present disclosure, rather than limiting the present disclosure; while the detailed description is made to the present disclosure with reference to the preceding examples, those ordinarily skilled in the art should understand that they still could modify the technical solutions described in various preceding examples, or make equivalent substitutions to some or all of the technical features therein; these modifications or substitutions do not make corresponding technical solutions essentially depart from the scope of the technical solutions of various examples of the present disclosure.

## Claims

1. A granular carbon black, **characterized in that**
particle size distribution of the granular carbon black ranges as follows: a weight percent of granular carbon black with a particle diameter less than 0.125 mm is equal to or less than 2 %, a weight percent of granular carbon black with a particle diameter ranging from 0.125 to 0.85 mm is from 18 % to 60 %, and a weight percent of granular carbon black with a particle diameter more than 0.85 mm is from 40 % to 80 %; and
a secondary particle diameter D50 of the granular carbon black ranges from 2.0 µm to 3.51 µm.

2. The granular carbon black according to claim 1, **characterized in that** the weight percent of granular carbon black with a particle diameter less than 0.125 mm is from 0.2 % to 2%.

3. The granular carbon black according to claim 1, **characterized in that** the granular carbon black has an amount of apparent specific volume ranging from 3.2 mL/g to 3.4 mL/g.

4. The granular carbon black according to claim 1, **characterized in that** a DBP absorption value of the granular carbon black is X₁, and a DBP absorption value of a carbon black original powder granulated to render the granular carbon black is X₂, wherein a value of (X₂-X₁)/X₂ ranges from 14.3% to 26.5%.

5. The granular carbon black according to claim 1, **characterized in that** a DBP absorption value of the granular carbon black is X₁, and a DBP absorption value of a carbon black original powder granulated to render the granular carbon black is X₂, wherein a value of (X₂-X₁)/X₂ ranges from 16.3% to 22%.

6. The granular carbon black according to claim 1, **characterized in that** the secondary particle diameter D50 of the granular carbon black is Yi, and a secondary particle diameter D50 of the carbon black original powder granulated to render the granular carbon black is Y₂, wherein a value of (Y₂-Y₁)/Y₂ ranges from 60.2% to 77.3%.

7. The granular carbon black according to claim 1, **characterized in that** the secondary particle diameter D50 of the granular carbon black is Yi, and a secondary particle diameter D50 of the carbon black original powder granulated to render the granular carbon black is Y₂, wherein a value of (Y₂-Y₁)/Y₂ ranges from 63.7% to 75%.

8. The granular carbon black according to claim 1, **characterized in that** the granular carbon black has an amount of particle strength equal to or less than 5.3 gf per particle;
preferably, the granular carbon black has an amount of particle strength ranging from 4.6 gf per particle to 5.3 gf per particle; and
preferably, a raw material of the granular carbon black is acetylene black.

9. A preparation method for the granular carbon black according to any one of claims 1-8, comprising following steps: wetting a carbon black original powder with water, and then performing wet granulation and drying, wherein
in the wet granulation, firstly, a stirring treatment is performed at a stirring speed of 2,200 r/min to 2,800 r/min for 15 min to 25 min, and then the stirring treatment is performed at a stirring speed of 1,200 r/min to 1,800 r/min for 2 min to 8 min; and
a mass ratio of the carbon black original powder to the water is 1: (2-2.5).

10. The preparation method for the granular carbon black according to claim 9, **characterized in that** in the step of wetting carbon black original powders with water, a pre-stirring treatment is performed at a stirring speed of 1,000 r/min to 1,400 r/min; and
preferably, duration of the pre-stirring treatment is 1 min to 5 min.

11. The preparation method for the granular carbon black according to claim 9, **characterized in that** the step of wetting carbon black powders with water comprises adding water into a container containing the carbon black powders under stirring at speed of 1,000 to 1,400 r/min.

12. The preparation method for the granular carbon black according to claim 9, **characterized in that** a temperature of the water is equal to or more than 60 °C; and
preferably, the carbon black powder is acetylene black.

13. An electrode, comprising the granular carbon black according to any one of claims 1-8 or the granular carbon black prepared according to the preparation method according to any one of claims 9-12.

14. A secondary battery, comprising a positive electrode, a negative electrode, an electrolyte and a separator, wherein at least one of the positive electrode and the negative electrode is the electrode according to claim 13.
